# EUROPÄISCHE PATENTSCHRIFT

(11) **EP 2 149 425 B1**
(45) Veröffentlichungstag und Bekanntmachung des Hinweises auf die Patenterteilung: **12.10.2016**
(21) Anmeldenummer: 09008790.9
(22) Anmeldetag: 04.07.2009
(51) Int. Cl.: B24B 19/02, B23F 15/08, B23F 19/10

(54) **Verfahren und Vorrichtung zum Herstellen eines Schraubenverdichterrotors**
Method and apparatus for producing a screw compressor rotor
Procédé et dispositif de fabrication d'un rotor de compresseur à vis

(30) Priorität: 30.07.2008 DE 102008035525
(43) Veröffentlichungstag der Anmeldung: 03.02.2010
(73) Patentinhaber: Kapp GmbH, 96450 Coburg (DE)
(72) Erfinder: Heyder, Hans-Jürgen, 96486 Lautertal (DE)
(74) Vertreter: Gosdin, Michael

(56) Entgegenhaltungen:
- DE-A1- 19 918 289
- DE-U1-202005 014 619
- JP-A- 53 075 514
- JP-A- 62 218 063
- US-A- 4 170 164

## Beschreibung

Die Erfindung betrifft ein Verfahren zum Herstellen eines Werkstücks in Form eines Schraubenverdichterrotors mit einer zylindrischen Grundkontur, an dessen Außenumfang ein schraubenförmiges Profil angeordnet ist, das die Schritte aufweist: a) Vorbearbeiten des Werkstücks durch Einbringung des Profils mit gegenüber der Endkontur vorhandenem Aufmaß, b) Vorschleifen des Profils in einem Schrupp-Arbeitsgang in einer Schleifmaschine, bei dem ein Teil des Aufmaßes abgetragen wird, und c) Fertigschleifen des Profils in einem Schlicht-Arbeitsgang in der Schleifmaschine, bei dem der Rest des Aufmaßes abgetragen und die Endkontur des Profils hergestellt wird. Des weiteren betrifft die Erfindung eine Schleifmaschine nach dem Oberbegriff des Anspruchs 9.

In Schraubenverdichterkompessoren werden Rotoren benötigt, die eine im wesentlichen zylindrische Außenkontur aufweisen, wobei in die Außenkontur ein schraubenförmiges Profil eingebracht ist. Zwei Rotoren, die hinsichtlich des Profils komplementär ausgebildet sind ("male" und "female"), stehen dabei beim Betrieb des Kompressors derart miteinander in Eingriff, dass bei der Rotation der Rotoren eine Gasströmung erzeugt wird, die zur Erzeugung eines Überdrucks genutzt wird.

Dabei ist es für einen guten Wirkungsgrad des Kompressors unabdingbar, dass die Profile in den Rotoren mit hoher Genauigkeit eingebracht sind, so dass Leckverluste gering bleiben.

Es ist daher bekannt, bei der Fertigung der in Rede stehenden Rotoren so vorzugehen, wie es eingangs erläutert wurde. Hiernach wird zunächst der Rotor im Rahmen eines Vorbearbeitungsschritts z. B. durch spanende Bearbeitung (Drehen, Fräsen) aus dem vollen Material oder durch urformende Formgebung (Gießen) vorgefertigt, so dass das Profil bereits im wesentlichen vorhanden ist, gegenüber der Endkontur jedoch noch ein definiertes Aufmaß aufweist.

Die präzise Formgebung erfolgt dann durch einen zweistufigen Schleifprozess in einer Schleifmaschine. Danach wird in einem ersten Schleif-Arbeitsschritt (Schruppen) ein Großteil des Aufmaßes abgetragen. In einem sich anschließenden weiteren Schleif-Arbeitsschritt (Schlichten) wird die Endkontur des Profils hergestellt, wobei hierbei nur noch der Rest des Ausmaßes abgeschliffen wird. Dabei werden für das Schrupp-Schleifen und für das Schlicht-Schleifen Profilschleifscheiben eingesetzt, die das Profil durch Führung des Schleifwerkzeugs durch die Profillücke am Werkstück abbilden.

Das Aufteilen der Bearbeitung in Schruppen und Schlichten ist auch bei der Verzahnungsherstellung bekannt. Die DE 20 2005 014 619 U1 schlägt den Einsatz eines Schruppwälzfräsers und eines Schlichtwälzfräsers vor, um schrägverzahnte Stirnzahnräder zu fertigen.

Gemäß der DE 203 20 294 U1 werden Zahnräder aus einem Rohling mittels Wälzfräsen vorbearbeitet; ein hierbei entstehender Grat wird durch ein scheibenförmiges Entgratwerkzeug entfernt.

Die DE 199 18 289 A1 offenbart für die Herstellung verzahnter Werkstücke in einem ersten Schritt ein Wälzfräsverfahren, an das sich in einem zweiten Schritt ein Feinbearbeitungsverfahren anschließt. Das Werkstück verbleibt während beider Bearbeitungsschritte in derselben Aufspannvorrichtung.

Das Aufteilen der Schleifbearbeitung in Schruppen und Schlichten erhöht bereits die Wirtschaftlichkeit des Verfahrens wesentlich.

Die JP 53 075 514 A offenbart die Fertigung eines Schraubenverdichterrotors, wobei die Schleifbearbeitung ausschließlich mittels einer Schleifschnecke durchgeführt wird. Andere Lösungen zeigen die JP 62 218 063 A und die US 4 170 164 A.

Nachteilig ist es, dass immer noch hohe Fertigungskosten für die Herstellung der in Rede stehenden Schraubenverdichterrotoren sowie ähnlicher Werkstücke anfallen, da zur Erreichung einer hohen Genauigkeit entsprechende Zeit benötigt wird. Ferner ist es erforderlich, dass der geschliffene Rotor einer Nachbearbeitung unterzogen wird. Dabei muss der Schleifgrat entfernt werden. Hierfür kommen separate Entgratmaschinen in Frage; alternativ kann die Entgratung per Hand vorgenommen werden, was die Herstellung entsprechend verteuert.

Der Erfindung liegt daher die **Aufgabe** zugrunde, ein Verfahren der eingangs genannten Art so weiterzuentwickeln und eine entsprechende Schleifmaschine vorzuschlagen, mit dem bzw. mit der es möglich ist, die Herstellung von Schraubenverdichterrotoren und entsprechender Profile kostengünstiger zu gestalten.

Die **Lösung** dieser Aufgabe durch die Erfindung ist verfahrensgemäß dadurch gekennzeichnet, dass das Vorschleifen mit einem schneckenförmigen Schleifwerkzeug im kontinuierlichen Wälzschleifverfahren durchgeführt wird und dass das Fertigschleifen mit einer Profilschleifscheibe im Profilschleifverfahren erfolgt.

Das kombinierte Wälzschleifen und Profilschleifen ist bei der Fertigung von Schraubenverdichterrotoren und ähnlicher Werkstücke bislang unbekannt gewesen.

Als Schruppwerkzeug und/oder als Schlichtwerkzeug kann ein abrichtbares Werkzeug eingesetzt werden. Es ist aber auch möglich, dass als Schruppwerkzeug und/oder als Schlichtwerkzeug ein Werkzeug mit Stahlgrundkörper eingesetzt wird, auf dem eine Schicht Abrasivmaterial, insbesondere kubisch-kristallines Bornitrid (CBN), angeordnet ist.

Das Schruppwerkzeug und das Schlichtwerkzeug können auf einer gemeinsamen Werkzeugspindel angeordnet sein, die beim Wechsel zwischen dem Eingriff des Schrupp- und des Schlichtwerkzeugs in Achsrichtung verschoben wird.

Eine besonders bevorzugte Ausgestaltung der Erfindung sieht vor, dass nach der Durchführung des Schlichtens in der Schleifmaschine ein Entgratvorgang am geschliffenen Profil durchgeführt wird. Der Entgratvorgang kann dabei durch eine oder durch mehrere rotierende Bürsten erfolgen, die im zu entgratenden Bereich des Werkstücks positioniert wird. Das Werkstück rotiert vorzugsweise während des Entgratvorgangs um seine Achse.

Die Schleifmaschine zum Schleifen eines solchen Werkstücks, insbesondere eines Schraubenverdichterrotors, zeichnet sich dadurch aus, dass die Schleifmaschine eine Werkzeugspindel aufweist, auf der im axialen Abstand ein Schrupp-Werkzeug in Form eines schneckenförmigen Schleifwerkzeugs und ein Schlicht-Werkzeug in Form einer Profilschleifscheibe angeordnet sind, wobei weiterhin ein Entgratwerkzeug zur Entfernung eines Grats am geschliffenen Werkstück vorhanden ist und wobei das Entgratwerkzeug eine rotierende Bürste ist.

Das Schruppwerkzeug und/oder das Schlichtwerkzeug kann als abrichtbares Werkzeug ausgebildet sein. Das Schruppwerkzeug und/oder das Schlichtwerkzeug kann alternativ als Werkzeug mit einem Stahlgrundkörper ausgebildet sein, auf dem eine Schicht Abrasivmaterial, insbesondere kubisch-kristallines Bornitrid (CBN), angeordnet ist.

Das Schruppwerkzeug und das Schlichtwerkzeug sind bevorzugt auf einer gemeinsamen Werkzeugspindel angeordnet, die axial verschieblich in der Schleifmaschine angeordnet ist.

Die Schleifmaschine umfasst also ein oder mehrere Entgratwerkzeuge zur Entfernung eines Grats am geschliffenen Werkstück in Form rotierende Bürsten.

Die bevorzugte Bauart sieht eine sich horizontal erstreckende Werkstückspindel vor.

Mit dem vorgeschlagenen Verfahren und der entsprechenden Schleifmaschine ist es möglich, insbesondere Schraubenverdichterrotoren kostengünstiger als bislang zu fertigen. Das Verfahren eignet sich auch für ähnliche Werkstücke mit einer schraubenförmigen Profilierung am Außenumfang des im wesentlichen zylindrischen Grundkörper des Werkstücks.

Das Verfahren kann mit abrichtbaren Schleifwerkzeugen oder mit abrichtfreien Schleifwerkzeugen durchgeführt werden, wobei in letzterem Falle ein Stahlgrundkörperwerkzeug eingesetzt wird, das an einem exakt gefertigten Profil mit einer Schicht Abrasivkörner belegt ist, wobei die galvanische Anbindung von CBN bevorzugt ist.

Das Schruppwerkzeug ist dabei mit einem größeren (gröberen) Schleifkorn versehen als das Schlichtwerkzeug. Das Korn für die Schlichtbearbeitung wird dabei so gewählt, dass die geforderte Oberflächengüte erreicht werden kann.

Das Schrupp- und Schlichtschleifen erfolgt in einer einzigen Aufspannung des Werkstücks.

Der abschließende Arbeitsgang ist das Entgraten der Stirnflächen des Rotors, das fortbildungsgemäß in derselben Aufspannung des Werkstücks in der Schleifmaschine mit einem Entgratwerkzeug (rotierende Bürsten) erfolgt.

Die erfindungsgemäße Verbindung von Wälzschleifen mittels einer Schleifschnecke zum Schruppen und von Profilschleifen mittels einer Profilschleifscheibe zum Schlichten in einer Aufspannung kombiniert die Vorteile der kürzeren Bearbeitungszeit des Wälzschleifens mit der höheren Genauigkeit des Profilschleifens.

Im Vergleich mit der vorbekannten Fertigungsmethode können daher kürzere Bearbeitungszeiten erreicht werden, ohne dass Einbußen hinsichtlich der Genauigkeit und der Oberflächenqualität hingenommen werden müssen.

Durch den in die Schleifmaschine integrierten Entgratprozess wird keine separate Entgratmaschine mehr benötigt bzw. es entfällt ein manueller Entgratprozess. Dies hat ebenfalls zur Folge, dass die Fertigungskosten reduziert werden können.

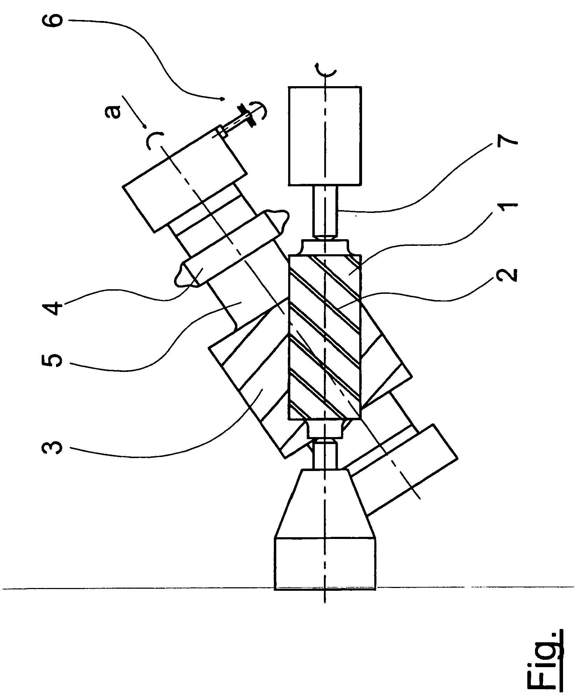

In der Zeichnung ist ein Ausführungsbeispiel der Erfindung dargestellt. Die einzige Figur zeigt schematisch die Vorderansicht eines Arbeitsraums einer Schleifmaschine, in der ein Schraubenkompressorrotor der Endbearbeitung unterzogen wird.

In der Figur ist ein Werkstück 1 in Form eines Schraubenverdichterrotors zu sehen, der bereits einer Vorbearbeitung unterzogen wurde, bevor er in die Schleifmaschine kommt. Der Rotor 1 weist demgemäß bereits ein schraubenförmiges Profil 2 am Umfang seiner zylindrischen Außenkontur auf. In der dargestellten Schleifmaschine erfolgt die komplette Fertigbearbeitung des Rotors 1, bestehend aus einem Schrupp- und einem Schlichtschleifvorgang sowie aus einem Entgratprozess.

Eine in der Figur dargestellte Werkzeugspindel 5 ist mit zwei Schleifwerkzeuge 3 und 4 versehen.

Dabei handelt es sich bei dem Schrupp-Werkzeug um eine Schleifschnecke 3, deren Profilierung so gestaltet ist, dass beim kontinuierlichen Abwälzen des Schneckenprofils im zu bearbeitenden Profil 2 durch Wälzschleifen der Großteil des vorhandenen Aufmaßes abgetragen wird.

Bei dem Schlicht-Werkzeug handelt es sich um eine Profilschleifscheibe 4, die in bekannter Weise die Kontur aufweist, um den schraubenförmigen Gang des Profils 2 exakt fertig bearbeiten zu können. Die Schleifschnecke 3 und die Profilschleifscheibe 4 sind im vorliegenden Falle als Stahlgrundkörperwerkzeuge ausgebildet. D. h. sie weisen einen exakt gefertigten Stahlgrundkörper auf, der mit einer einzigen Schicht kubisch-kristallinem Bornitrid (CBN) belegt ist, wobei mittels eines galvanischen Vorgangs die CBN-Körner mit einem Verbundmetall (Nickel) am Stahlgrundkörper fixiert sind.

Das Schruppwerkzeug 3 und das Schlichtwerkzeug 4 sind dabei alternativ im Eingriff. Der Wechsel zwischen Schruppen und Schlichten erfolgt durch Bewegung der Werkzeugspindel 5 in Achsrichtung a.

In der Figur ist die Durchführung des Schrupp-Schleifprozesses dargestellt. Das Werkstück 1 ist auf einer Werkstückspindel 7 zwischen zwei Spitzen aufgenommen. Die Werkzeugspindel 5 und die Werkstückspindel 7 sind direkt angetrieben; ihre Drehung erfolgt synchronisiert (elektronische Kopplung).

Während die Werkstückspindel 7 horizontal ausgerichtet ist, wird die Werkzeugspindel 5 um einen Winkel geschwenkt, wie es das Kämmen der Werkzeuge 3, 4 gemäß dem zu erzeugenden Profil erfordert.

Nach dem Schruppen mit dem Werkzeug 3 erfolgt das Schlichten mit dem Werkzeug 4 in bekannter Weise. Anschließend erfolgt automatisch in derselben Werkstückaufspannung das Entgraten des Werkstücks 1 mittels eines oder mehrerer Entgratwerkzeuge 6, vorliegend in Form einer rotierenden Bürste. Die Bürste wird dabei rotierend in den Stirnbereichen des Werkstücks 1, d. h. am Auslauf des Profils 2 positioniert und die Werkstückspindel 7 gedreht. Der Grat wird hierdurch automatisch entfernt.

Als Schleifschnecke 3 kommt eine Zylinderschleifschnecke zum Einsatz. Denkbar ist jedoch auch der Einsatz einer nicht-zylindrischen Schnecke (Globoidschnecke).

Der Einsatz von abrichtfreien Schleifwerkzeugen 3, 4 ist nicht zwingend. Es können auch abrichtbare Werkzeuge eingesetzt werden, wobei dann noch eine entsprechende Abrichtvorrichtung in der Schleifmaschine vorgesehen werden muss.

Bevorzugt ist das dargestellte und beschriebene Vorgehen, d. h. das Schruppen mit der Schleifschnecke und das Schlichten mit der Profilschleifscheibe, vorgesehen. Grundsätzlich denkbar ist aber auch jeweils das Schruppen und/oder Schlichten mit Schleifschnecke bzw. mit Profilschleifscheibe in beliebigen Kombinationen.

Auch können abrichtfreie und abzurichtende Schleifwerkzeuge kombiniert eingesetzt werden.

Möglich ist es alternativ ferner, dass die beiden Schleifwerkzeuge 3, 4 auf separaten Werkzeugspindeln angeordnet sind.

Eine weitere sinnvolle Alternative ist die vertikale Bauweise, bei der die Werkstückspindel 7 vertikal ausgerichtet ist.

Besonders bevorzugt eignet sich die vorgeschlagene Lösung für kleinere Rotoren, um hier einen größtmöglichen Einspareffekt zu erreichen.

### Bezugszeichenliste:

- 1: Werkstücks (Schraubenverdichterrotor)
- 2: schraubenförmiges Profil
- 3: Schrupp-Werkzeug / schneckenförmiges Schleifwerkzeug
- 4: Schlicht-Werkzeug / Profilschleifscheibe
- 5: Werkzeugspindel
- 6: Entgratwerkzeug (rotierende Bürste)
- 7: Werkstückspindel

- a: Achsrichtung

## Patentansprüche

1. Verfahren zum Herstellen eines Schraubenverdichterrotors (1) mit einer zylindrischen Grundkontur, an dessen Außenumfang ein schraubenförmiges Profil (2) angeordnet ist, das die Schritte aufweist:
a) Vorbearbeiten des Werkstücks (1) durch Einbringung des Profils (2) mit gegenüber der Endkontur vorhandenem Aufmaß,
b) Vorschleifen des Profils (2) in einem Schrupp-Arbeitsgang in einer Schleifmaschine, bei dem ein Teil des Aufinaßes abgetragen wird, und
c) Fertigschleifen des Profils (2) in einem Schlicht-Arbeitsgang in der Schleifmaschine, bei dem der Rest des Aufmaßes abgetragen und die Endkontur des Profils (2) hergestellt wird,
**dadurch gekennzeichnet, dass**
das Vorschleifen mit einem schneckenförmigen Schleifwerkzeug (3) im kontinuierlichen Wälzschleifverfahren durchgeführt wird und dass das Fertigschleifen mit einer Profilschleifscheibe (4) im Profilschleifverfahren erfolgt.

2. Verfahren nach Anspruch 1, **dadurch gekennzeichnet, dass** als Schruppwerkzeug (3) und/oder als Schlichtwerkzeug (4) ein abrichtbares Werkzeug eingesetzt wird.

3. Verfahren nach Anspruch 1, **dadurch gekennzeichnet, dass** als Schruppwerkzeug (3) und/oder als Schlichtwerkzeug (4) ein Werkzeug mit Stahlgrundkörper eingesetzt wird, auf dem eine Schicht Abrasivmaterial, insbesondere kubisch-kristallines Bornitrid (CBN), angeordnet ist.

4. Verfahren nach einem der Ansprüche 1 bis 3, **dadurch gekennzeichnet, dass** das Schruppwerkzeug (3) und das Schlichtwerkzeug (4) auf einer gemeinsamen Werkzeugspindel (5) angeordnet sind, die beim Wechsel zwischen dem Eingriff des Schrupp- und des Schlichtwerkzeugs in Achsrichtung (a) verschoben wird.

5. Verfahren nach einem der Ansprüche 1 bis 4, **dadurch gekennzeichnet, dass** nach der Durchführung des Schritts c) gemäß Anspruch 1 in der Schleifmaschine ein Entgratvorgang am geschliffenen Profil durchgeführt wird.

6. Verfahren nach Anspruch 5, **dadurch gekennzeichnet, dass** der Entgratvorgang durch eine oder mehrere rotierende Bürsten (6) erfolgt, die im zu entgratenden Bereich des Werkstücks (1) positioniert sind.

7. Verfahren nach Anspruch 5 oder 6, **dadurch gekennzeichnet, dass** das Werkstück (1) während des Entgratvorgangs um seine Achse rotiert.

8. Verfahren nach einem der Ansprüche 1 bis 7, **dadurch gekennzeichnet, dass** das Werkstück (1) im Rahmen der Vorbearbeitung gemäß Schritt a) nach Anspruch 1 oder vor diesem Schritt mittels eines Gießvorgang hergestellt wird.

9. Schleifmaschine zum Schleifen eines Werkstücks (1) mit einer zylindrischen Grundkontur, an dessen Außenumfang ein schraubenförmiges Profil (2) angeordnet ist, insbesondere eines Schraubenverdichterrotors, wobei das Werkstück (1) ein durch eine Vorbearbeitung eingebrachtes Profil (2) mit gegenüber der Endkontur vorhandenem Aufmaß aufweist, insbesondere zur Durchführung des Verfahrens nach einem der Ansprüche 1 bis 8,
dadurch **gekenntzeichnet,** dass
die Schleifmaschine eine Werkzeugspindel (5) aufweist, auf der im axialen Abstand ein Schrupp-Werkzeug (3) in Form eines schneckenförmigen Schleifwerkzeugs und ein Schlicht-Werkzeug (4) in Form einer Profilschleifscheibe angeordnet sind, wobei weiterhin ein Entgratwerkzeug (6) zur Entfernung eines Grats am geschliffenen Werkstück (1) vorhanden ist und wobei das Entgratwerkzeug (6) eine rotierende Bürste ist.

10. Schleifmaschine nach Anspruch 9, **dadurch gekennzeichnet, dass** das Schruppwerkzeug (3) und/oder das Schlichtwerkzeug (4) als abrichtbares Werkzeug ausgebildet ist.

11. Schleifmaschine nach Anspruch 9, **dadurch gekennzeichnet, dass** das Schruppwerkzeug (3) und/oder das Schlichtwerkzeug (4) als Werkzeug mit einem Stahlgrundkörper ausgebildet ist, auf dem eine Schicht Abrasivmaterial, insbesondere kubisch-kristallines Bornitrid (CBN), angeordnet ist.

12. Schleifmaschine nach einem der Ansprüche 9 bis 11, **dadurch gekennzeichnet, dass** das Schruppwerkzeug (3) und das Schlichtwerkzeug (4) auf einer gemeinsamen Werkzeugspindel (5) angeordnet sind, die axial verschieblich in der Schleifmaschine angeordnet ist.

13. Schleifmaschine nach einem der Ansprüche 9 bis 12, **dadurch gekennzeichnet, dass** die Werkstückspindel (7) horizontal angeordnet ist.

## Claims

1. Method for the production of a rotor of a rotary screw compressor (1) with a cylindrical basic shape, which has a helical profile (2) at its outer circumference, wherein the method comprises the steps of:
a) Pre-processing of the workpiece (1) by bringing in the profile (2), wherein the profile (2) has a stock compared with the finished shape,
b) Pre-grinding of the profile (2) by a rough-machining process in a grinding machine, wherein a part of the stock is removed and
c) Finish-grinding of the profile (2) by a finish-machining process in the grinding machine, wherein the remainder of the stock is removed and the finished shape of the profile (2) is produced, **characterized in that**
the pre-grinding is carried out with a grinding worm (3) by a continuous generative grinding process and that the finish-grinding is carried out with a profile grinding wheel by a profile grinding process.

2. Method according to claim 1, **characterized in that** a dressable tool is used as the rough-machining tool (3) and/or as the finish-machining tool (4).

3. Method according to claim 1, **characterized in that** a tool with a base body made from steel is used as rough-machining tool (3) and/or as finish-machining tool (4) on which a layer of abrasive material is arranged, especially a layer of cubic boron nitride (CBN).

4. Method according to one of claims 1 till 3, **characterized in that** the rough-machining tool (3) and the finish-machining tool (4) are arranged on a common tool spindle (5) which is shifted in axial direction (a) for changing the engagement between the rough-machining tool and the finish-machining tool.

5. Method according to one of claims 1 till 4, **characterized in that** after the accomplishment of step c) according claim 1 a deburring process is carried out in the grinding machine at the grinded profile.

6. Method according to claim 5, **characterized in that** the deburring process is carried out by one or more rotating brushes (6) which are positioned in the region of the workpiece (1) which has to be deburred.

7. Method according to claim 5 or 6, **characterized in that** the workpiece (1) rotates during the deburring process around its axis.

8. Method according to one of claims 1 till 7, **characterized in that** the workpiece (1) is produced by means of a casting process during step a) of claim 1 or before this step.

9. Grinding machine for grinding of a workpiece (1) with a cylindrical base shape, which has a helical profile (2) at its outer circumference, especially of a rotor of a rotary screw compressor, wherein the workpiece (1) is provided with a profile (2) which is brought in by pre-processing and wherein the profile (2) has a stock compared with the finished shape, especially for the accomplishment of the method according to one of claims 1 till 8,
**characterized in that**
the grinding machine has a tool spindle (5) on which a rough-machining tool (3) being a grinding worm and a finish-machining tool (4) being a profile grinding wheel is arranged in axial distance, wherein it further has a deburring tool (6) for the removal of burr at the grinded workpiece (1) and wherein the deburring tool (6) is a rotating brush.

10. Grinding machine according to claim 9, **characterized in that** the rough-machining tool (3) and/or the finish-machining tool (4) are dressable tools.

11. Grinding machine according to claim 9, **characterized in that** the rough-machining tool (3) and/or the finish-machining tool (4) are tools with a base body made from steel on which a layer of abrasive material is arranged, especially a layer of cubic boron nitride (CBN).

12. Grinding machine according to one of claims 9 till 11, **characterized in that** the rough-machining tool (3) and the finish-machining tool (4) are arranged on a common tool spindle (5) which is arranged axially shiftable in the grinding machine.

13. Grinding machine according to one of claims 9 till 12, **characterized in that** the workpiece spindle (7) is arranged horizontally.

## Revendications

1. Procédé de fabrication d'un rotor de compresseur à vis (1) comprenant un contour de base cylindrique, sur la périphérie extérieure duquel est disposé un profil de forme hélicoïdale (2), comprenant les étapes suivantes :
a) usinage préalable de la pièce (1) par incorporation du profil (2) avec une dimension de base prévue par rapport au contour final,
b) meulage initial du profil (2) dans une passe de travail d'ébauche dans une meuleuse, au cours duquel une partie de la dimension de base est enlevée, et
c) meulage de finition du profil (2) dans une passe de travail de finition dans la meuleuse, au cours duquel le reste de la dimension de base est enlevé et le contour final du profil (2) est fabriqué,
**caractérisé en ce que**
le meulage initial est effectué avec un outil de meulage en forme de vis (3) dans un procédé continu de rectification en développante et **en ce que** le meulage de finition est effectué avec une meule à profiler (4) dans un procédé de rectification de profils.

2. Procédé selon la revendication 1, **caractérisé en ce que** l'on utilise en tant qu'outil d'ébauche (3) et/ou en tant qu'outil de finition (4) un outil pouvant être dressé.

3. Procédé selon la revendication 1, **caractérisé en ce que** l'on utilise en tant qu'outil d'ébauche (3) et/ou en tant qu'outil de finition (4) un outil avec un corps de base en acier sur lequel est disposée une couche de matériau abrasif, en particulier de nitrure de bore cubique cristallin (CBN).

4. Procédé selon l'une quelconque des revendications 1 à 3, **caractérisé en ce que** l'outil d'ébauche (3) et l'outil de finition (4) sont disposés sur une broche d'outil commune (5) qui, lors du passage entre l'engagement de l'outil d'ébauche et de l'outil de finition, est déplacée dans la direction axiale (a).

5. Procédé selon l'une quelconque des revendications 1 à 4, **caractérisé en ce qu'**après la mise en oeuvre de l'étape c) selon la revendication 1 dans la meuleuse est effectuée une opération d'ébarbage sur le profil meulé.

6. Procédé selon la revendication 5, **caractérisé en ce que** l'opération d'ébarbage est effectuée par une ou plusieurs brosses rotatives (6) qui sont positionnées dans la région de la pièce (1) devant être ébarbée.

7. Procédé selon la revendication 5 ou 6, **caractérisé en ce que** la pièce (1) tourne autour de son axe pendant l'opération d'ébarbage.

8. Procédé selon l'une quelconque des revendications 1 à 7, **caractérisé en ce que** la pièce (1) est fabriquée au moyen d'une opération de coulée dans le cadre de l'usinage préalable selon l'étape a) selon la revendication 1, ou avant cette étape.

9. Meuleuse pour meuler une pièce (1) comprenant un contour de base cylindrique, sur la périphérie extérieure de laquelle est disposé un profil de forme hélicoïdale (2), en particulier d'un rotor de compresseur à vis, la pièce (1) présentant un profil (2) incorporé par usinage préalable avec une dimension de base prévue par rapport au contour final, en particulier pour mettre en oeuvre le procédé selon l'une quelconque des revendications 1 à 8,
**caractérisée en ce que**
la meuleuse présente une broche d'outil (5) sur laquelle sont disposés à distance axiale un outil d'ébauche (3) en forme d'outil de meulage en forme de vis et un outil de finition (4) en forme de meule à profiler, un outil d'ébarbage (6) étant en outre prévu pour enlever des barbes sur la pièce meulée (1) et l'outil d'ébarbage (6) étant une brosse rotative.

10. Meuleuse selon la revendication 9, **caractérisée en ce que** l'outil d'ébauche (3) et/ou l'outil de finition (4) sont réalisés sous forme d'outil pouvant être dressé.

11. Meuleuse selon la revendication 9, **caractérisée en ce que** l'outil d'ébauche (3) et/ou l'outil de finition (4) sont réalisés sous forme d'outil avec un corps de base en acier sur lequel est disposée une couche de matériau abrasif, en particulier de nitrure de bore cubique cristallin (CBN).

12. Meuleuse selon l'une quelconque des revendications 9 à 11, **caractérisée en ce que** l'outil d'ébauche (3) et l'outil de finition (4) sont disposés sur une broche d'outil commune (5) qui est disposée de manière déplaçable axialement dans la meuleuse.

13. Meuleuse selon l'une quelconque des revendications 9 à 12, **caractérisée en ce que** la broche d'outil (7) est disposée horizontalement.
